# EUROPÄISCHE PATENTSCHRIFT

(11) **EP 1 528 281 B1**
(45) Veröffentlichungstag und Bekanntmachung des Hinweises auf die Patenterteilung: **13.08.2008**
(21) Anmeldenummer: 04025363.5
(22) Anmeldetag: 26.10.2004
(51) Int. Cl.: F16F 7/116, F16F 15/00, F16F 7/10

(54) **Adaptiver Schwingungstilger**
Adaptive vibration damper
Amortisseur de vibrations adaptatif

(30) Priorität: 27.10.2003 DE 10351243
(43) Veröffentlichungstag der Anmeldung: 04.05.2005
(73) Patentinhaber: Deutsches Zentrum für Luft- und Raumfahrt e.V., 51147 Köln (DE)
(72) Erfinder: Breitbach, Elmar J., 37075 Göttingen (DE)
(74) Vertreter: Rehberg Hüppe + Partner

(56) Entgegenhaltungen:
- EP-A- 0 907 036
- WO-A1-02/31378
- US-A- 4 626 730
- US-A- 5 915 508

## Beschreibung

Die Erfindung betrifft einen Schwingungstilger mit den Merkmalen des Oberbegriffs des Patentanspruchs 1.

### STAND DER TECHNIK

Ein Schwingungstilger, d. h. ein passives Bauteil zur Reduktion von Schwingungen einer Struktur, indem Schwingungsenergie aus der Struktur gezogen und auf den Schwingungstilger übertragen wird, ist im Wesentlichen durch seine Tilgermasse und die Federsteifigkeit seiner Federanordnung definiert. Diese legen zusammen die Tilgereigenfrequenz des Tilgers fest. Bei der Tilgereigenfrequenz weist der Schwingungstilger seine höchste Effizienz bei der Übernahme von Schwingungsenergie aus der zu dämpfenden Struktur auf. dies bedeutet, dass ein Schwingungstilger auf die Schwingungen, die bei der jeweiligen Struktur zu dämpfen sind, abgestimmt werden muss. In der Praxis gibt es jedoch eine Vielzahl von schwingenden Strukturen, bei denen zwar eine Dämpfung mit einem Schwingungstilger wünschenswert wäre, bei denen jedoch die Frequenz der zu dämpfenden Schwingung mehr oder weniger stark mit einem Betriebszustand der Struktur variiert. So verändert sich beispielsweise bei einem Turbopropflugzeug die durch die Propellerdrehzahl und die Anzahl der Propellerblätter festgelegte Störfrequenz typischerweise um +/- 10 bis 20 % abhängig davon, ob sich das Flugzeug im Reise-, Senk- oder Steigflug befindet. Ähnliche monofrequente aber frequenzvariable Störschwingungen treten auch bei einer Vielzahl anderer Strukturen auf, wie beispielsweise bei Antrieben von Straßen-, Schienen- und Wasserfahrzeugen, Werkzeugmaschinen, Walzwerken, Papier- und Druckmaschinen. Unterschiede zwischen der Frequenz der zu dämpfenden Schwingung und der Tilgereigenfrequenz, die bei Änderungen einer Störfrequenz zwangsläufig auftreten, führen zur zunehmenden Unwirksamkeit eines Schwingungstilgers. Besonders große Empfindlichkeiten gegenüber Unterschieden zwischen der Frequenz der zu dämpfenden Schwingung und der Tilgereigenfrequenz zeigen Schwingungstilger mit geringer tilgereigenen Dämpfung. Bei sehr geringer Tilgerdämpfung können schon sehr kleine Frequenzunterschiede sogar zu einer Verstärkung der Störschwingungen führen. Dieses Problem wird häufig durch eine deutliche Erhöhung der Tilgerdämpfung, wie sie beispielsweise bei Schwingungstilgern mit Elastomerfederanordnungen inhärent vorhanden ist, entschärft. Die Tilgerdämpfung verbreitert zunehmend das Gebiet der Wirksamkeit des Tilgers. Gleichzeitig führt sie aber zu einer deutlichen Minderung der Tilgerwirkung bei der eigentlichen Tilgereigenfrequenz.

Es wird daher auch der Ansatz verfolgt, die Tilgereigenfrequenz eines Schwingungstilgers veränderbar zu machen. Entsprechende Schwingungstilger werden als adaptive Schwingungstilger oder High-Performance Tilger bezeichnet. Bei solchen Schwingungstilgern wird die Tilgereigenfrequenz an die aktuelle Frequenz der zu dämpfenden Schwingung angepasst. Dies kann grundsätzlich durch Änderung der Tilgermasse oder der Federsteifigkeit der Federanordnung des Schwingungstilgers erfolgen.

Bei einem bekannten Schwingungstilger mit einer über eine Federanordnung an einer Basis gelagerten Tilgermasse und mit einem zur Veränderung der Tilgereigenfrequenz ansteuerbaren Linearaktuator Schwingungstilger stützt sich die Tilgermasse über eine Hebelanordnung an der Federanordnung ab. Dabei können die Hebelverhältnisse und damit die für die Tilgermasse wirksame Federsteifigkeit mit einem Linearaktuator verändert werden, indem beispielsweise die Tilgermasse längs eines Hebelarms verschoben wird. Der Aufbau dieses bekannten Schwingungstilgers ist aufgrund der zusätzlichen Hebelanordnung und der Führung der Tilgermasse gegenüber dem Hebelarm komplex. Wenn schnelle Linearaktuatoren, wie beispielsweise Piezoaktuatoren zur Verschiebung der Tilgermasse längs des Hebelarms verwendet werden, sind nur kleine Verschiebungswege und damit auch nur kleine Veränderungen des Hebels mit vertretbarem Aufwand realistisch. Andere Linearaktuatoren mit größeren Stellwegen sind typischerweise langsamer als Piezoaktuatoren, d. h. mit ihnen kann die Abstimmung der Tilgereigenfrequenz auf die Frequenz der aktuell zu dämpfenden Schwingung nur langsam erfolgen. Darüber hinaus implizieren diese Lösungsansätze in der Regel ein höheres Maß an konstruktiver Komplexität.

Bei einem aus der DE 196 05 551 A1 bekannten Schwingungstilger weist die Federanordnung eine Mehrzahl von Blattfedern auf, die zu jeweils mindestens drei Blattfedern in mindestens zwei Ebenen angeordnet sind und sich im Ruhezustand des Schwingungstilgers im Wesentlichen senkrecht zu der Bewegungsrichtung der Tilgermasse gleichsinnig in Umfangsrichtung um diese Bewegungsrichtung erstrecken. Der zur Veränderung der Tilgereigenfrequenz ansteuerbare Linearaktuator ist eine die Tilgermasse in ihrer Bewegungsrichtung hin und her bewegende Tauchspulenanordnung. Die Tauchspulenanordnung wird so angesteuert, dass eine Unterdrückung von Relativbewegungen der Basis des Schwingungstilgers erfolgt. Das heißt, der aus der DE 196 05 551 A1 bekannte Schwingungstilger ist ein aktiver Schwingungstilger, bei dem sich zwar eine Veränderung der Tilgereigenfrequenz bei der Ansteuerung seines Linearaktuators ergibt, bei dem aber nicht die Tilgereigenfrequenz zur Abstimmung seiner passiven Tilgerfunktion verändert wird.

Bisherige Versuche der direkten Änderung der Federsteifigkeit der Federanordnung eines Schwingungstilgers haben zu noch komplexeren Gesamtkonstruktionen geführt, oder der mit der verstellbaren Tilgereigenfrequenz abdeckbare Frequenzbereich war nur sehr klein.

Ein Schwingungstilger mit den Merkmalen des Patentanspruchs 1 ist aus der US 5,695,027 A bekannt. Hier ist an den Innenseiten von zwei einander gegenüberliegenden Wänden eines quaderförmigen Gehäuses jeweils eine Tilgermasse über zwei parallel zueinander angeordneten Blattfedern gelagert. In der Haupterstreckungsrichtung der Blattfedern, die mit der zu den beiden einander gegenüberliegenden Wänden des Gehäuses normalen Richtung zusammen fällt, werden die beiden Tilgermassen mit dem Linearaktuator gegeneinander beaufschlagt, was in eine variable Drucklast auf die Blattfedern resultiert. Der Linearaktuator stützt sich direkt zwischen den beiden Tilgermassen des bekannten Schwingungstilgers ab. Die auf die Blattfedern ausgeübten Drucklasten werden über die Seitenwandungen des quaderförmigen Gehäuses abgestützt, die deshalb besonders massiv ausgebildet sein müssen. Überdies führt die Kopplung der Tilgermassen des bekannten Schwingungsdämpfers durch den Linearaktuator zu einer unerwünschten Beschränkung der Amplitude der möglichen seitlichen Bewegung der Trägermassen.

### AUFGABE DER ERFINDUNG

Der Erfindung liegt die Aufgabe zugrunde, einen Schwingungstilger mit den Merkmalen des Oberbegriffs des Patentanspruchs 1 aufzuzeigen, der einen grundsätzlich einfachen Aufbau aufweist und dennoch erlaubt, die Tilgereigenfrequenz über einen großen Frequenzbereich auf zu dämpfende Schwingungen abzustimmen.

### LÖSUNG

Die Aufgabe der Erfindung wird erfindungsgemäß durch einen Schwingungstilger mit den Merkmalen des Patentanspruchs 1 gelöst. Vorteilhafte Ausführungsformen des neuen Schwingungstilgers sind in den Unteransprüchen 2 bis 8 beschrieben.

### BESCHREIBUNG DER ERFINDUNG

Die Federanordnung des neuen Schwingungstilgers weist als wesentliches Element eine Blattfeder auf. Die Federanordnung kann auch ausschließlich aus einer solchen Blattfeder bestehen. Es können aber auch mehrere Blattfedern vorhanden sein, und es können auch andere weitere Federn, wie beispielsweise eine Elastomerfeder zur Erhöhung der inhärenten Dämpfung der Federanordnung vorgesehen werden. Die Blattfeder wird bei dem neuen Schwingungstilger mit dem Linearaktuator zwischen ihren Federenden beaufschlagt. Dabei kann die Beaufschlagung in eine Belastung der Blattfeder auf Druck resultiert. Durch die Druckkräfte zwischen den Federenden der Blattfeder wird deren Quersteifigkeit, d. h. die Biegesteifigkeit der Blattfeder in ihrer üblichen Beanspruchungsrichtung reduziert. Es ist sogar eine Reduktion der Biegesteifigkeit (Quersteifigkeit) gegen null möglich, wenn die mit dem Linearaktuator aufgebrachte Drucklast gleich groß wie die kritische Last wird, bei der die Blattfeder zwischen ihren Federenden einknickt. Durch Ansteuerung des Linearaktuators zum Aufbringen unterschiedlicher Drucklasten kann die auf der Blattfeder basierende Biegesteifigkeit der Federanordnung bei dem neuen Schwingungstilger in weiten Grenzen variiert werden. So kann konkret ein Schwingungstilger bereitgestellt werden, dessen Tilgereigenfrequenz gegenüber einer mittleren Tilgereigenfrequenz um beispielsweise +/- 30 % variierbar ist.

Die konkreten Ausführungsformen des neuen Schwingungstilgers können durchaus unterschiedlich ausfallen. Es ist aber bevorzugt, wenn möglichst wenig bewegliche Teile bei dem Schwingungstilger vorhanden sind. So ist die Tilgermasse typischerweise starr an einem Federende der Blattfeder gelagert. Die Blattfeder kann an ihrem anderen Federende ebenfalls starr an der Basis gelagert sein. Wenn die Federanordnung überhaupt nur aus der Blattfeder besteht, ist eine beidseitig starre Verbindung die einzig sinnvolle Konstruktion. Bei mehreren Blattfedern kann beispielsweise auch eine bewegliche Abstützung eines oder mehrerer Federenden erfolgen. Hierdurch wird aber der Gesamtaufbau des neuen Schwingungstilgers verkompliziert.

Um möglichst nur die gewollte Druckbelastung auf die Blattfeder auszuüben, ist der Linearaktuator über ein biegeweiches und zugfestes Anschlusselement abgestützt. Hierbei kann es sich um ein Seil aus unterschiedlichsten Materialien handeln. Welche Elastizitätsanforderung an das jeweilige Material zu stellen sind, wird weiter unten noch näher beleuchtet werden.

Das biegeweiche und zugfeste Anschlusselement ist parallel zu der Blattfeder des neuen Schwingungstilgers angeordnet, d. h. sie erstreckt sich parallel zu der Blattfeder zwischen deren Federenden.

Um einerseits die gewünschte Druckbelastung in der unmittelbaren Verbindungslinie zwischen den Federenden der Blattfeder mit dem Anschlusselement aufbringen zu können und um andererseits keine ungewollten Störungen der Verformung der Blattfeder durch das Anschlusselement hervorzurufen, kann die Blattfeder eine Ausnehmung aufweisen, in der das Anschlusselement verläuft. Alternativ können zwei Anschlusselemente beiderseits der Blattfeder angeordnet sein, die dann aber auch durch den einen oder mehrere Linearaktuatoren gleichmäßig beaufschlagt werden sollten.

In einer besonders bevorzugten Ausführungsform des neuen Schwingungstilgers ist der Linearaktuator Teil der Tilgermasse. Dabei können Steuerleitungen zu dem Linearaktuator zugleich mechanische Anschlüsse für den Linearaktuator ausbilden, also beispielsweise das bereits angesprochene Anschlusselement.

Die Einwirkung des Linearaktuators auf die Blattfeder des neuen Schwingungstilgers kann zu einer nichtlinearen Gesamtfederkennlinie führen. Eine zumindest im Wesentlichen lineare Gesamtfederkennlinie kann aber dadurch erreicht werden, dass eine elastische Längenänderung des Linearaktuators und seiner mechanischen Anschlüsse aufgrund einer auf die Blattfeder ausgeübten Drucklast wesentlich größer ist als eine Abstandsänderung zwischen den Federenden der Blattfeder bei ihrer Verformung aufgrund einer Auslenkung der Tilgermasse. Konkret gesagt sollte diese elastische Längenänderung mindestens zweimal so groß sein wie die Abstandsänderung zwischen den Federenden.

Bei dem neuen Schwingungstilger ist der Linearaktuator vorzugsweise ein Piezoaktuator, der kompakt ist und sehr schnell ansteuerbar ist. Der übliche Nachteil eines Piezoaktuators, nur vergleichsweise kurze Verstellwege aufzuweisen, ist bei dem neuen Schwingungstilger kaum beachtlich, weil hier typischerweise nur kurze Stellwege benötigt werden. Grundsätzlich sind aber auch pneumatische, hydraulische, elektrodynamische, magnetostriktive und auch beliebige andere bekannte Linearaktuatoren bei dem neuen Schwingungstilger einsetzbar.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Seitenansicht einer ersten Ausführungsform des neuen Schwingungstilgers,
- **Fig. 2**: zeigt eine weitere Seitenansicht des Schwingungstilgers gemäß Fig. 1 aus einer Blickrichtung, die unter 90° zu der Blickrichtung gemäß Fig. 1 verläuft,
- **Fig. 3**: zeigt eine Wiedergabe des Schwingungstilgers in der Blickrichtung gemäß Fig. 1 bei Auslenkung seiner Tilgermasse, und
- **Fig. 4**: zeigt verschiedene Federkennlinien zu dem Schwingungstilger in der Ausführungsform gemäß den Fig. 1 bis 3 bei unterschiedlicher Ansteuerung dessen Linearaktuators.

### FIGURENBESCHREIBUNG

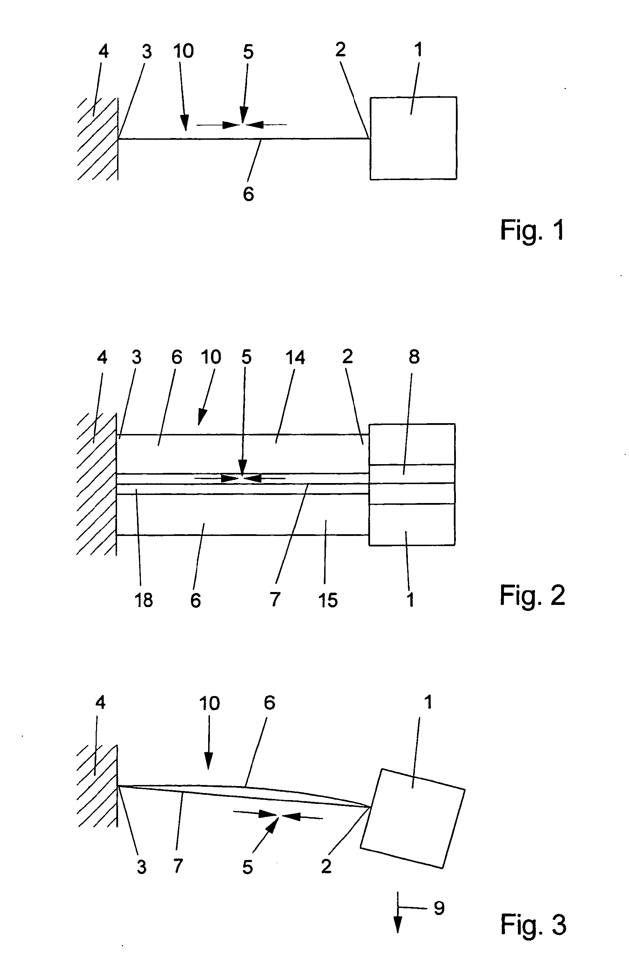

Der in den Fig. 1 und 2 dargestellte Schwingungstilger besteht aus einer Tilgermasse 1 und einer Federanordnung 10, über die die Tilgermasse 1 elastisch an eine Basis 4 angekoppelt ist. Die Federanordnung 10 umfasst eine in zwei Teile 14 und 15 aufgeteilte Blattfeder 6. An ihrem einem Federende 3 ist die Blattfeder 6 starr an der Basis 4 gelagert. An dem anderen, freien Federende 2 der Blattfeder 6 ist die Tilgermasse 1 starr an der Blattfeder 6 gelagert. In einer Ausnehmung 18 zwischen den Teilen 14 und 15 der Blattfeder 6 verläuft ein Anschlusselement 7 in Form eines Seils. Das Anschlusselement 7 ist an die Basis 4 fest angebunden. An der Tilgermasse 1 stützt sich das Anschlusselement 7 über einen Linearaktuator 8 ab, der Teil der Tilgermasse 1 ist. Das Anschlusselement 7 dient dazu, mit dem Linearaktuator 8 eine einstellbare Drucklast 5 zwischen den Federenden 2 und 3 der Blattfeder 6 aufzubringen. Konkret ist die Anordnung so, dass bei einer Längenvergrößerung des Linearaktuators 8 das Anschlusselement 7 auf Zug belastet wird und die entsprechende reactio als Druckkraft zwischen den Federenden 2 und 3 der Blattfeder 6 wirkt.

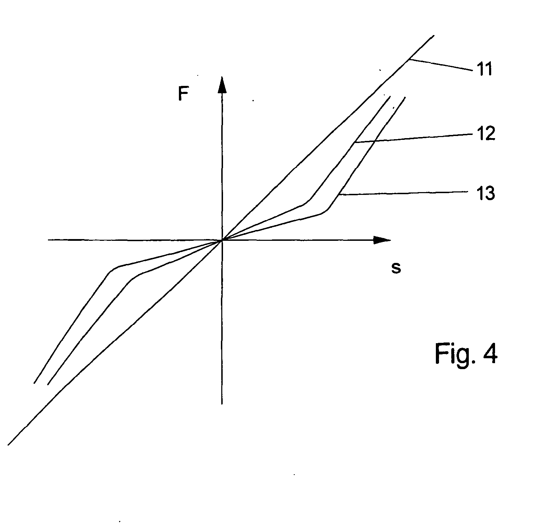

Durch eine zunehmende Drucklast 5 zwischen den Federenden 2 und 3 der Blattfeder 6 wird die effektive Quersteifigkeit der Federanordnung 10 reduziert, die die Tilgereigenfrequenz des Schwingungstilgers bei Schwingungen der Tilgermasse 1 in der in Fig. 3 mit einem Pfeil 9 angegebenen Richtung bestimmt. Die Drucklast 5 reduziert den Bedarf an zusätzlicher Kraft in Richtung des Pfeils 9 auf die Tilgermasse 1, um diese in der Richtung des Pfeils 9 auszulenken. Auf diese Weise wird die Tilgereigenfrequenz des Schwingungstilgers gemäß Fig. 1, die neben der Tilgermasse 1 von der Federsteifigkeit der Federanordnung 10 abhängt, durch die Drucklast 5 variiert. Mit der Auslenkung der Tilgermasse 1 in der Richtung des Pfeils 9 gemäß Fig. 4 verkürzt sich der Abstand zwischen den Federenden 2 und 3 der bogenförmig deformierten Blattfeder 6 und damit der von dem Anschlusselement 7 überbrückte Abstand zwischen der Tilgermasse 1 und der Basis 4. Entsprechend nimmt die Zuglast 5 bei gleicher Ansteuerung des Linearaktuators ab. Diese Abnahme der Drucklast 5 kann jedoch dadurch begrenzt werden, dass die Zugsteifigkeit des Anschlusselements 7 so gewählt wird, dass seine Längenänderung aufgrund der Drucklast 5 wesentlich größer ist als die sich durch die Auslenkung der Tilgermasse 1 und die entsprechende bogenförmige Verformung der Blattfeder 6 ergebene Verkürzung des Abstands zwischen den Federenden 2 und 3. Die Zugsteifigkeit des Anschlusselements 7 darf umgekehrt natürlich nicht so klein gewählt werden, dass über den Verstellweg des Linearaktuators die zur Abstimmung des Schwingungstilgers notwendige Drucklast 5 nicht mehr aufgebracht werden kann. Bei der Auslegung der Steifigkeit des Anschlusselements 7 ist auch die Eigensteifigkeit des Linearaktuators 8 zu berücksichtigen.

Fig. 4 skizziert unterschiedliche Federkennlinien 11 bis 13, die durch unterschiedliche Ansteuerung des Linearaktuators 8 bei der Ausführungsform des neuen Schwingungstilgers gemäß den Fig. 1 bis 3 erreicht werden können und die unterschiedlichen Tilgereigenfrequenzen des Schwingungstilgers entsprechen. Die Federkennlinie 11 ist die Federkennlinie, bei der eine Drucklast 5 null zwischen den Federenden 2 und 3 der Bogenfeder wirkt. Bei der Federkennlinie 12 wirkt eine mittlere Drucklast 5. Bei der Federkennlinie 13 wirkt die maximale Drucklast 5. Mit zunehmender Drucklast 5 zwischen den Federenden 2 und 3 reduziert sich der Anstieg der Kraft F bei einer Auslenkung der Tilgermasse 1 am Federende 2 der Bogenfeder 6 um den Weg s in der Richtung des Pfeils 9 gemäß Fig. 3. Die anschließend auftretende Wiederannäherung der Federkennlinien 12 und 13 an die Federkennlinie 11 beruht auf der Entspannung des Anschlusselements 7 durch den zunehmend kleiner werdenden Abstand zwischen den Federenden 2 und 3 der bogenförmig deformierten Blattfeder 6. Diese Annäherung kann, wie oben ausgeführt wurde, durch eine niedrige Abstimmung der Zugsteifigkeit des Anschlusselements 7 und des Linearaktuators 8 herausgezögert werden. In einem konkreten Beispiel konnte ein Schwingungstilger mit einer der Federkennlinie 11 entsprechenden Tilgereigenfrequenz von 130 Hz durch gezielte Ansteuerung des Linearaktuators 8 bis herab auf 70 Hz abgestimmt werden.

Die wesentlichen Vorteile des neuen Schwingungstilgers können mit den folgenden Stichworten zusammengefasst werden: kompakte Bauweise, d. h. geringer Bauraum; Nutzung der Masse des Linearaktuators als Teil der Tilgermasse, d. h. extrem geringer Unterschied zwischen der Gesamtmasse des Schwingungstilgers und der Tilgermasse, der auch als Todmasse bezeichnet wird; einfacher konstruktiver Aufbau ohne Gelenke, zusätzliche bewegte Antriebe oder Mechaniken möglich; einfache Veränderung der Tilgereigenfrequenz ausschließlich durch Änderung der statischen Zug- oder Drucklast zwischen den Federenden der bogenförmig deformierten Blattfeder; schnelle Adaptionsfähigkeit, d.h. die Tilgereigenfrequenz kann sehr schnell nachgeführt werden; einfache Steuerbarkeit, bei einer definierten Ansteuerung des Linearaktuators ergibt sich eine definierte Verschiebung der Tilgereigenfrequenz; geringer Energiebedarf, da Änderungen der Druck- bzw. Zuglast auf die Blattfeder durch quasistatische, geringfügige elektrische Ladungsverschiebungen in dem Linearaktuator möglich sind.

## Patentansprüche

1. Schwingungstilger mit einer über eine Federanordnung an einer Basis gelagerten Tilgermasse und mit einem zur Veränderung der Tilgereigenfrequenz ansteuerbaren Linearaktuator, wobei die Federanordnung eine Blattfeder aufweist und wobei der über ein Anschlusselement abgestützte Linearaktuator die Blattfeder in Längsrichtung zwischen ihren Federenden (2, 3) beaufschlagt, was in eine Belastung der Blattfeder auf Druck und damit in eine Reduzierung der Quersteifigkeit der Blattfeder resultiert, **dadurch gekennzeichnet, dass** das Anschlusselement (7) biegeweich und zugfest ist und parallel zu der Blattfeder (6) angeordnet ist.

2. Schwingungstilger nach Anspruch 1, **dadurch gekennzeichnet, dass** die Tilgermasse (1) starr an einem Federende (2) der Blattfeder (6) gelagert ist.

3. Schwingungstilger nach Anspruch 1 oder 2, **dadurch gekennzeichnet, dass** die Blattfeder (6) an ihrem anderen Federende (3) starr an der Basis (4) gelagert ist.

4. Schwingungstilger nach einem der Ansprüche 1 bis 3, **dadurch gekennzeichnet, dass** die Blattfeder (6) eine Ausnehmung (18) aufweist, in der das Anschlusselement (7) verläuft.

5. Schwingungstilger nach einem der Ansprüche 1 bis 4, **dadurch gekennzeichnet, dass** der Linearaktuator (8) Teil der Tigermasse (1) ist.

6. Schwingungstilger nach Anspruch 5, **dadurch gekennzeichnet, dass** Steuerleitungen zu dem Linearaktuator (8) zugleich mechanische Anschlüsse für den Linearaktuator (8) ausbilden.

7. Schwingungstilger nach einem der Ansprüche 1 bis 6, **dadurch gekennzeichnet, dass** eine elastische Längenänderung des Linearaktuators (8) und seiner mechanischen Anschlüsse aufgrund einer auf die Blattfeder (6) ausgeübten Druck- oder Zuglast (5, 17) mindestens zweimal so groß ist wie eine Abstandsänderung zwischen den Federenden (2, 3) der Blattfeder (6) bei ihrer Verformung aufgrund einer Auslenkung der Tilgermasse (1).

8. Schwingungstilger nach einem der Ansprüche 1 bis 7, **dadurch gekennzeichnet, dass** der Linearaktuator (8) ein Piezoaktuator ist.

## Claims

1. Vibration absorber having an absorber mass mounted to a basis via a spring arrangement and a linear actuator operatable for varying the absorber resonance frequency, wherein the spring arrangement comprises a leaf spring and wherein the linear actuator supported via a connection element acts upon the leaf spring in longitudinal direction between its springs ends (2, 3), resulting in a pressure load on the leaf spring and thus in a reduction of the transverse stiffness of the leaf spring, **characterized in that** the connection element (7) is angular flexible and of tensile strength, and arranged in parallel to the leaf spring (6).

2. Vibration absorber according to claim 1, **characterized in that** the absorber mass (1) is rigidly mounted to one spring end (2) of the leaf spring (6).

3. Vibration absorber according to claim 1 or 2, **characterized in that** the leaf spring (6) is rigidly mounted to the basis (4) at its other spring end (3).

4. Vibration absorber according to any of the claims 1 to 3, **characterized in that** the leaf spring (6) has a cut (18) through which the connection element (7) runs.

5. Vibration absorber according to any of the claims 1 to 4, **characterized in that** the linear actuator (8) is part of the absorber mass (1).

6. Vibration absorber according to claim 5, **characterized in that** control lines to the linear actuator (8) simultaneously provide mechanic connections to the linear actuator (8).

7. Vibration absorber according to any of the claims 1 to 6, **characterized in that** an elastic change in length of the linear actuator (8) and its mechanic connections due to a pressure or tensile load (5, 17) on the leaf spring (6) is at least twice as high as any change in distance between the spring ends (2, 3) of the leaf spring (6) upon its deformation due to the displacement of the absorber mass (1).

8. Vibration absorber according to any of the claims 1 to 7, **characterized in that** the linear actuator (8) is a piezo-actuator.

## Revendications

1. Amortisseur de vibrations comportant une masse d'amortissement, attachée à une base par l'intermédiaire d'un système à ressort, et comportant un actionneur linéaire commandable pour faire varier la fréquence propre de l'amortisseur, le système de ressort comportant un ressort à lame et l'actionneur linéaire, supporté par un élément de jonction, sollicitant le ressort à lame dans le sens longitudinal entre ses extrémités de ressort (2, 3), ce qui induit une sollicitation en pression du ressort à lame et donc une diminution de la rigidité transversale du ressort à lame, **caractérisé en ce que** l'élément de jonction (7) est flexible et résistant à la traction et est disposé parallèlement au ressort à lame (6).

2. Amortisseur de vibrations selon la revendication 1, **caractérisé en ce que** la masse d'amortissement (1) est montée de manière rigide sur une extrémité (2) du ressort à lame (6).

3. Amortisseur de vibrations selon la revendication 1 ou 2, **caractérisé en ce que** le ressort à lame (6), au niveau de son autre extrémité (3), est monté de manière rigide contre la base (4).

4. Amortisseur de vibrations selon l'une quelconque des revendications 1 à 3, **caractérisé en ce que** le ressort à lame (6) comporte un évidement (18), dans lequel s'étend l'élément de jonction (7).

5. Amortisseur de vibrations selon l'une quelconque des revendications 1 à 4, **caractérisé en ce que** l'actionneur linéaire (8) est une partie de la masse d'amortissement (1).

6. Amortisseur de vibrations selon la revendication 5, **caractérisé en ce que** des lignes de commande vers l'actionneur linéaire (8) forment en même temps des raccords mécaniques pour l'actionneur linéaire (8).

7. Amortisseur de vibrations selon l'une quelconque des revendications 1 à 6, **caractérisé en ce que**, compte tenu d'une contrainte de pression ou de traction (5, 17), exercée sur le ressort à lame (6), une variation élastique de la longueur de l'actionneur linéaire (8) et de ses raccords mécaniques correspond au moins au double d'une variation de distance entre les extrémités (2, 3) du ressort à lame (6) lors de la déformation de celui-ci sous l'effet d'une déviation de la masse d'amortissement (1).

8. Amortisseur de vibrations selon l'une quelconque des revendications 1 à 7, **caractérisé en ce que** l'actionneur linéaire (8) est un actionneur piézoélectrique.
